Europäisches Patentamt

European Patent Office

Office européen des brevets

(19)

(11) Veröffentlichungsnummer: **0 082 366**
**B1**

(12) **EUROPÄISCHE PATENTSCHRIFT**

(45) Veröffentlichungstag der Patentschrift:
**19.02.86**

(51) Int. Cl.⁴: **A 01 F 25/00,** A 23 N 17/00

(21) Anmeldenummer: **82111138.2**

(22) Anmeldetag: **02.12.82**

(54) **Verfahren und Vorrichtung zur Herstellung von Futtermittel durch Nasseinlagerung in einem Silo.**

(30) Priorität: **11.12.81 DE 3149147**

(43) Veröffentlichungstag der Anmeldung:
**29.06.83 Patentblatt 83/26**

(45) Bekanntmachung des Hinweises auf die Patenterteilung:
**19.02.86 Patentblatt 86/8**

(84) Benannte Vertragsstaaten:
**AT BE CH FR GB IT LI NL**

(56) Entgegenhaltungen:
**EP - A - 0 015 781**
**WO - A - 81/03076**
**DE - A - 2 832 031**
**DE - A - 2 914 715**

**Top AGRAR Heft 9/1979**

(73) Patentinhaber: **Gantefort, Wilhelm, Ostriker Berg 4,**
**D-4284 Heiden (DE)**
Patentinhaber: **Lipp, Xaver, Hohenstaufenstrasse 30,**
**D-7090 Ellwangen (DE)**
Patentinhaber: **Schonefeld, Norbert, Hesseler 29,**
**D-4720 Beckum/Vellern (DE)**
Patentinhaber: **Wissing, Heinrich, Am Sportzentrum 6,**
**D-4284 Heiden (DE)**

(72) Erfinder: **Gantefort, Wilhelm, Ostriker Berg 4,**
**D-4284 Heiden (DE)**
Erfinder: **Wissing, Heinrich, Am Sportzentrum 6,**
**D-4284 Heiden (DE)**

(74) Vertreter: **Eichelbaum, Lambert, Dipl.-Ing.,**
**Michaelstrasse 4, D-4350 Recklinghausen 2 (DE)**

ACTORUM AG

**Beschreibung**

Die Erfindung betrifft ein Verfahren zur Herstellung von Futtermitteln aus Getreide, wie z. B. Corn Cob Mix, das gemahlen, gemischt und sodann in einem Silo gelagert wird, aus dem es entnommen und mit einem bestimmten Feuchtigkeitsgehalt verfüttert wird sowie eine Vorrichtung zur Durchführung dieses Verfahrens.

Bei einem bekannten Verfahren dieser Art (Sonderdruck aus «top agrar», Heft 9/1979) wird CCM bis zu einem Spindelanteil von 80% und mit einem Feuchtigkeitsgehalt von ca. 45% in einem Silo eingelagert. Bei Bedarf wurde es sodann von einer Obenfräse in die Silomitte transportiert, von dort mit einem Zentralauswurf nach oben entnommen und dann von einem Sauggebläse in einen Schweinestall als Schrot abgesogen. Hiernach wurde das Getreideschrot über einen Zyklon in einen Mischbehälter befördert und dort mit Molke und Eiweissergänzungsfutter gemischt sowie anschliessend über eine Pumpdosieranlage verfüttert.

Nachteilig ist bei diesem Verfahren und der hierzu verwendeten Vorrichtung, dass einerseits am Ausgang der Getreidemühle Verklebungen und Verklumpungen auftreten, welche die Kontinuität des Verfahrens beeinträchtigen und dass andererseits lediglich eine «trockene» Einlagerung von CCM mit einem Feuchtigkeitsgehalt von ca. 45% erfolgen kann, hingegen die Einlagerung von Erntegut mit einem Feuchtigkeitsgehalt von 56% abgebrochen werden muss. Andere Getreidearten als CCM können mit diesem Verfahren nicht oder nur unter noch grösseren Schwierigkeiten eingelagert werden. Bei dieser sogenannten «trockenen» Einlagerung ist eine Aufschliessung des Einlagergutes durch eine Milchsäureumsetzung entweder gar nicht oder in nur verschwindend geringem Masse möglich. Das gilt auch für den Mischbehälter, in dem die zu verfütternde Mischung nur maximal wenige Stunden Zeit hat, um einen Milchsäureanteil zu bilden. Eine solche kurze Zeit reicht jedoch wiederum zu einer erwähnenswerten Milchsäurebildung nicht aus.

Und schliesslich ist auch die Vorrichtung zur Durchführung dieses Verfahrens, zu dem neben einem Silo eine Obenfräse, komplizierte Gebläseleitungen, ein Zyklon, besonders ausgebildete Bögen, Molketanks usw. erforderlich sind, relativ aufwendig und störanfällig.

Von diesem Stand der Technik ausgehend liegt der Erfindung die Aufgabe zugrunde, ein Verfahren und eine Vorrichtung der eingangs genannten Art zu schaffen, mit denen in einfacher Weise Getreide mit einem relativ hohen Feuchtigkeitsgehalt «nass» sowie in sich biologisch selbstkonservierender Weise eingelagert und sodann daraus in störungsfreier Weise entnommen, einem Mischbehälter zugeführt und von dort nach Zuführung von Eiweisskomponenten, Flüssigkeit oder dgl. verfüttert werden kann.

Diese Aufgabe wird verfahrensmässig in Verbindung mit dem vorgenannten Gattungsbegriff dadurch gelöst, dass das Getreide vor seiner Einlagerung in einem Mischbehälter durch Zusatz von Wasser und/oder Impfstoffen als Katalysatoren zur Beschleunigung der Milchsäurebildung und/oder Eiweisskomponenten zu einem teigigen, breiigen Einlagergut auf einen Feuchtigkeitsgehalt von 55% bis 50% gemischt und angereichert wird, sodann unter bekanntem Luftabschluss in dem Silo eingelagert, dort belassen und daraus nach Bildung einer bestimmten Menge von Milchsäure entnommen wird. In einem Versuch hat sich überraschend gezeigt, dass schon nach vier Tagen frisches Einlagergut biologisch konserviert war. Diese biologische Konservierung ging dadurch vonstatten, dass Milchsäurebakterien in dieser kurzen Zeit ca. 3% der Stärke in Milchsäure umgesetzt hatten. Das Futter wies dabei einen PH-Wert von 3,5 bis 4 auf. Das auf diese Weise hergestellte Futter ist voll konserviert und weist den besonderen Vorteil auf, dass bei seiner Verfütterung auf die zusätzliche Beimischung von Antibiotika von unter Infektionsdruck stehenden Tieren verzichtet werden kann. Dabei hatte die Milchsäure überraschend noch einen weiteren positiven Nebeneffekt. Es konnte festgestellt werden, dass sie das Futter teilweise aufschliesst und es leichter verdaulich gestaltet. Die positive Reaktion von mit einem derartigen Futter verfütterten Schweinen beteht darin, dass sie einen sehr festen Kot aufweisen, sehr ruhig und ausgeglichen wirken und eine bessere Vitalität zeigen.

Durch diese Verfahrensweise braucht man zu keiner Jahreszeit auf die besonderen Vorteile dieses Futters zu verzichten und bei den Tieren eine Futterumstellung vorzunehmen. Darüber hinaus gestattet diese Verfahrensweise auch Zukauffutter «aufzuwerten», nass einzulagern und somit die Rentabilität dieses Verfahrens und der Fütterung zu steigern.

Besonders vorteilhaft ist es, als Einlagergut Getreide, wie Roggen, Gerste, Hafer, Weizen, CCM oder Mischungen davon zu verwenden. Dabei kann das CCM mit einem Spindelanteil von 60% bis 70% versehen sein.

Zur Erzielung einer raschen biologischen Konservierung wird frisches Einlagergut gemeinsam mit verfütterungsfähigem Einlagergut, das heisst mit solchem, welches schon einige Zeit eingelagert ist, in einem gemeinsamen Silo angeordnet. Dadurch wird durch die bereits vorhandenen Milchsäurebakterien in dem schon zwei bis vier Tage im Silo befindlichen und nunmehr verfütterungsfähigen Einlagergut die Umsetzung von Stärke in Milchsäure bei dem frischen Einlagergut beschleunigt. Dieses frische Einlagergut wird solange in dem Silo belassen, bis es durch einen Milchsäureanteil von mindestens 2%, vorteilhaft 3%, bei einem PH-Wert von höchstens 4,5, besser von 3,5, in verfütterungsfähiges Einlagergut umgewandelt wird.

Zur einfachen Einlagerung und Entnahme des Einlagergutes wird frisches Einlagergut in den Silo gepumpt und verfütterungsfähiges Einlagergut daraus abgesaugt. Diese gesamten Vorgänge erfolgen vorteilhaft unter Luftabschluss, um die Milchsäurebakterienbildung nicht zu hemmen.

Eine vorteilhafte Vorrichtung zur Durchführung des vorbeschriebenen Verfahrens mit einem Silo, einer Füll- und einer Entnahmeeinrichtung ist dadurch gekennzeichnet, dass das Getreide vor seiner Einlagerung von einer Dosierschnecke in einen Mischbehälter transportierbar und dort durch Zusätze zu einem teigigen, breiigen Einlagergut auf einen Feuchtigkeitsgehalt von 55% bis 60% mischbar ist, von dort über einen Einfülltrichter in eine die Füll- und Entnahmeeinrichtung bildenden Schneckenpumpe gelangt, die über mindestens eine Transportleitung mit dem Silo verbunden ist. Die Schneckenpumpe ist an einer Seite mit einem Dreiwegeventil verbunden, von dem zwei Transportleitungen zum Silo führen, wobei die erste Transportleitung in das untere, vorteilhaft trichterförmig ausgebildete Ende des Silos und die zweite Transportleitung oberhalb davon in den Silo einmündet. Die zweite Transportleitung mündet mindestens zwei Meter oberhalb der ersten Transportleitung in den Silo ein, um durch diese Anordnung sicherzustellen, dass stets nur verfütterungsfähiges, das heisst einen Milchsäureanteil von mindestens 2% und einen PH-Wert von höchstens 4,5 aufweisendes Einlagergut aus dem Silo entnommen wird und nicht etwa mit frischem Einlagergut während der Entnahme gemischt wird. Eine solche Mischung kann um so weniger auftreten, je höher frisches Einlagergut in dem Silo eingelagert wird.

Die erste Transportleitung kann bei der Erstfüllung nicht nur als Entnahme-, sondern auch zugleich als Fülleitung verwendet werden. Nach der Erstfüllung wird die erste Transportleitung in der Regel nur noch als Entnahmeleitung verwendet. Um stets eine störungsfreie, kontinuierliche Entnahme zu gewährleisten, ist eine absperrbare Wasserzuleitung mit ihrem Ausflussende im Innenraum des Silos unmittelbar oberhalb der Mündungsöffnung der ersten Transportleitung angeordnet und auf diese gerichtet. Das Ausflussende dieser Wasserleitung ist vorteilhaft mit einem Sprühkopf versehen. Dadurch kann die Entnahmeöffnung bei Verklumpungen oder Verkrustungen des Einlagergutes jederzeit freigespült werden, zumal das aus dem Silo entnommene Einlagergut ohnehin noch vor seiner Verfütterung mit Wasser und Eiweisskomponenten im weitesten Sinne, wie Soja-, Fleisch- und Fischmehl, versetzt wird.

Die Schneckenpumpe ist an ihrer vom Dreiwegeventil abgewandten Seite mit einem Stutzen versehen, mit welchem wahlweise ein Einfülltrichter oder eine Entnahmeleitung verbindbar sind. Dabei dient der Trichter zum Füllen und Einlagern von frischem Einlagergut je nach Stellung des Dreiwegeventils über die zweite und/oder erste Transportleitung. Die mit dem gleichen Stutzen verbindbare Entnahmeleitung dient zur Entnahme von verfütterungsfähigem Einlagergut aus dem Silo über dieselbe Schneckenpumpe und deren Zuführung in einen Mischbehälter, in dem Wasser und Eiweisskomponenten zugemischt werden. Es ist jedoch auch möglich, den Stutzen mit einem Dreiwegeventil zu versehen und an den einen Weg den Einfülltrichter und an den anderen Weg die Entnahmeleitung anzuordnen.

In vorteilhafter Weiterbildung der Erfindung ist oberhalb des Einfülltrichters der Schneckenpumpe eine Überlauföffnung eines Mischbehälters angeordnet, in welchem gemahlenes Getreide mit Wasser angereichert und durch ein Rührwerk zu einem teigigen, breiigen Einlagergut vermischbar ist. Dem Mischbehälter ist wiederum eine Feuchtgetreidemühle zugeordnet, von deren Ausgang das Mahlgut über eine Förderschnecke und eine Mischschnecke in den Mischbehälter förderbar ist. Die Förderschnecke ist oberhalb der Mischschnecke angeordnet und beide Schnecken sind bis auf eine Durchlassöffnung voneinander durch eine Trennwand getrennt, wobei ihre Förderrichtungen gegenläufig ausgebildet sind. Durch diese Anordnung wird eine sichere Abführung des zu Verklebungen und Verklumpungen neigenden Mahlgutes am Ausgang der Feuchtgetreidemühle gewährleistet. Dieses Mahlgut fällt sodann unter seiner Schwerkraft durch die Durchlassöffnung zwischen beiden Schnecken, wo es sodann von der in entgegengesetzter Richtung fördernden Mischschnecke erfasst und in den Mischbehälter gefördert wird. In Förderrichtung der Mischschnecke mündet unmittelbar nach der Durchlassöffnung eine Mischwasserleitung in den Mischbehälter ein. Das durch diese Anordnung nunmehr mit Wasser angereicherte Mahlgut wird sodann von der Mischschnecke in den Mischbehälter gefördert und dort von einem Rührwerk in erfindungsgemässer Weise zu einem teigigen, breiigen Einlagergut gemischt.

Dem Eingang der Feuchtgetreidemühle ist der Ausgang einer Dosierschnecke zugeordnet, über welche das zu mahlende Getreide mengenabhängig zuführbar ist.

In besonders vorteilhafter Weise wird das neue Verfahren vollautomatisch durchgeführt. Dies geschieht vorteilhaft dadurch, dass der Getreidemengenzulauf aus der Dosierschnecke in die Feuchtgetreidemühle und der Wassermengenzulauf aus der Mischwasserleitung in den Mischbehälter in Abhängigkeit von dem Feuchtigkeitsgehalt des Mischgutes im Mischbehälter von einem Feuchtigkeits-Signalgeber über eine elektronische Regeleinrichtung steuerbar sind. Durch diese Vorrichtung sind grundsätzlich drei Regelungsmöglichkeiten vorhanden. Zum einen kann der Feuchtigkeits-Signalgeber ausschliesslich den Getreidemengenzulauf aus der Dosierschnecke in die Feuchtgetreidemühle vergrössern oder verkleinern. Zum anderen kann der Feuchtigkeits-Signalgeber den Wassermengenzulauf aus der Mischwasserleitung in den Mischbehälter vergrössern oder drosseln. Und schliesslich kann der Feuchtigkeits-Signalgeber gleichzeitig den Getreidemengenzulauf und den Wassermengenzulauf vergrössern oder verkleinern.

Um beim Füllvorgang des Silos Störungen an der Schneckenpumpe, z.B. in Form von Kavitationen, zu vermeiden und beim Füllvorgang des Silos eine Luftzuführung auszuschliessen, ist die Schneckenpumpe in Abhängigkeit von einem im Einfülltrichter angeordneten Niveau-Signalgeber über die elektronische Regeleinrichtung ein- und ausschaltbar. Demzufolge wird bei einem zu geringen Niveau des Mischgutes im Einfülltrichter die Schneckenpumpe abgeschaltet und bei Erreichen eines Mindestniveaus die Schneckenpumpe eingeschaltet.

Eine Vorrichtung zur Durchführung des erfindungsgemässen Verfahrens ist in den Zeichnungen dargestellt. Dabei zeigen:

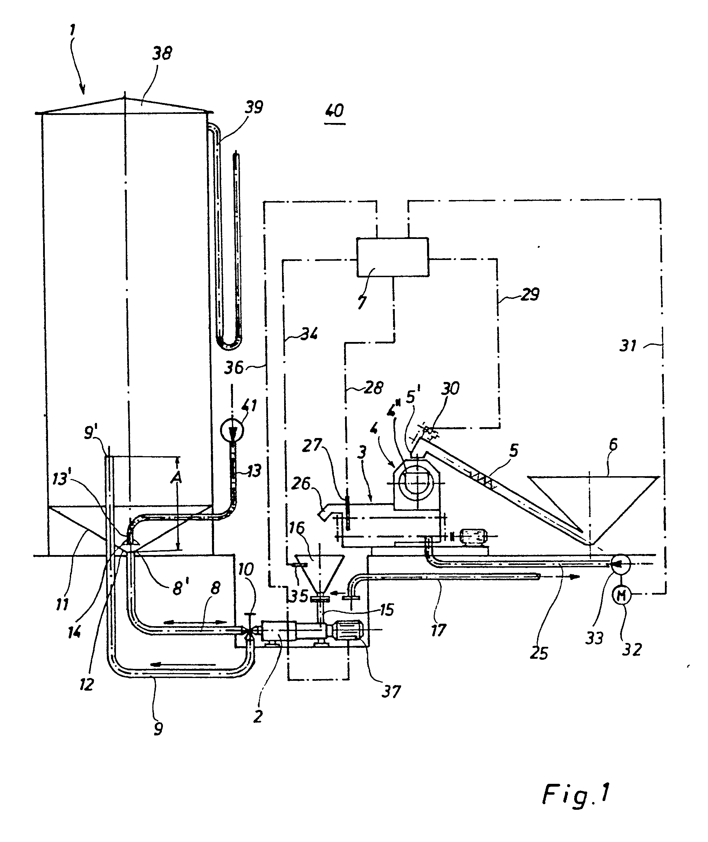

Fig. 1 die Ansicht des Silos, der Schneckenpumpe, des Mischbehälters mit der Feuchtgetreidemühle und der Dosierschnecke einschliesslich sämtlicher Verbindungsleitungen,

Fig. 2 eine schematische Schnittansicht durch den Mischbehälter und die ihm zugeordnete Feuchtgetreidemühle,

Fig. 3 eine Ansicht des Mischbehälters entlang der Linie III/III von Fig. 2 und

Fig. 4 eine Seitenansicht in teilweisem Schnitt entlang der Linie IV/IV von Fig. 2 durch die Feuchtgetreidemühle und den Mischbehälter.

Die neue Vorrichtung zur Durchführung des erfindungsgemässen Verfahrens setzt sich im wesentlichen aus einem Silo 1, einer Schneckenpumpe 2, einem Mischbehälter 3, einer Feuchtgetreidemühle 4, einer Dosierschnecke 5 mit einem Aufgabetrichter 6 und einer elektronischen Regeleinrichtung 7 zusammen.

Die Schneckenpumpe 2 stellt zugleich die Füll- und Entnahmeeinrichtung für den Inhalt des Silos 1 dar. Die Schneckenpumpe 2 ist über eine erste Transportleitung 8 und eine zweite Transportleitung 9 sowie über ein Dreiwegeventil 10 mit dem Silo 1 verbunden. Die erste Transportleitung 8 endet in das als Trichter 11 ausgebildete, untere Ende 12 des Silos 1, wohingegen die zweite Transportleitung 9 oberhalb davon in den Silo 1 einmündet. Der Mindestabstand A zwischen der Einmündungsstelle 8' der ersten Transportleitung 8 und der Einmündungsstelle 9' der zweiten Transportleitung 9 in den Silo 1 beträgt zwei Meter. Ein grösserer Abstand A ist jederzeit möglich, jedoch dann mit einer grösseren Leistung der Schneckenpumpe 2 verbunden. Hingegen birgt ein geringerer Abstand A die Gefahr, dass bei der Entnahme von verfütterungsfähigem Einlagergut über die Leitung 8 frisches, über die zweite Transportleitung 9 eingefülltes Einlagergut nach unten durchschlägt und sodann – in unerwünschter Weise – vor der Bildung einer hinreichenden Menge von Milchsäure entnommen wird.

Unmittelbar oberhalb der Mündungsöffnung 8' der ersten Transportleitung 8 führt eine absperrbare Wasserzuleitung 13 in den Silo 1. Das mit einem Sprühkopf 14 versehene Ausflussende 13' dieser Wasserzuleitung 13 ist unmittelbar auf die Mündungsöffnung 8' der ersten Transportleitung 8 gerichtet. Dadurch können Verkrustungen des Einlagergutes freigespült werden.

An ihrer vom Dreiwegeventil 10 abgewandten Seite ist die Schneckenpumpe 2 mit einem Stutzen 15 versehen, mit welchem wahlweise ein Einfülltrichter 16 oder eine Entnahmeleitung 17 verbindbar sind. Oberhalb des Einfülltrichters 16 der Schneckenpumpe 2 ist der Mischbehälter 3 angeordnet, in welchem gemahlenes Getreide mit Wasser angereichert wird.

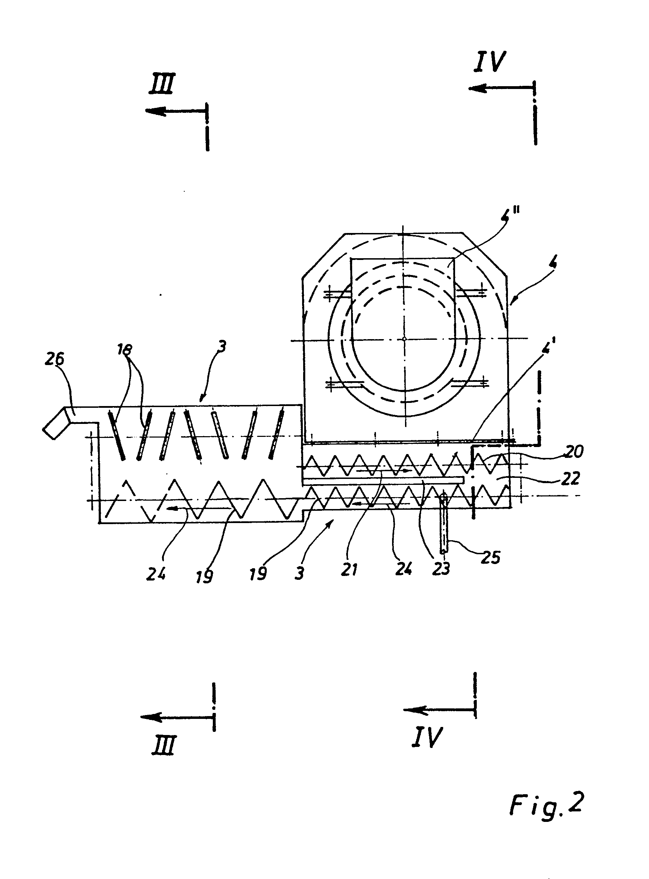

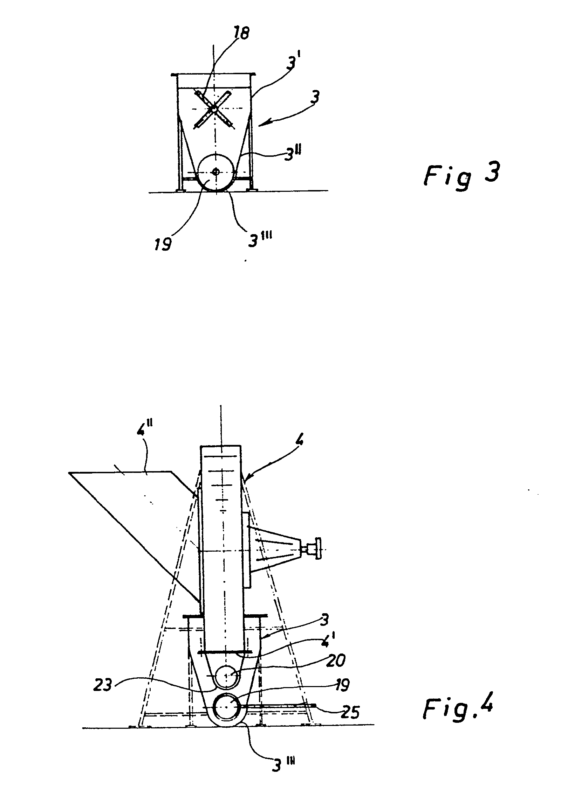

Wie insbesondere aus den Fig. 2 bis 4 entnommen werden kann, besteht der Mischbehälter 3 aus einem quaderförmigen Teil 3' und einem prismatischen Teil 3" mit halbkreisförmig abgerundetem Ende 3'''. Im quaderförmigen Teil 3' ist ein Rührwerk 18 und im prismatischen Teil 3" ist im unteren, halbkreisförmig ausgebildeten Ende 3''' eine Mischschnecke 19 angebracht. In dem vom Rührwerk 18 abgewandten Teil des Mischbehälters 3 ist die Feuchtgetreidemühle 4 angeordnet, von deren Ausgang 4' das Mahlgut über eine Förderschnecke 20 in Richtung des Pfeiles 21 abgezogen wird. Unterhalb der Förderschnecke 20 ist die Mischschnecke 19 angeordnet. Beide Schnecken 19, 20 sind bis auf eine Druchlassöffnung 22 voneinander durch eine Trennwand 23 getrennt. Die Mischschnecke 19 fördert in Richtung des Pfeiles 24. Damit sind die Förderrichtungen 21, 24 von Förderschnecke 20 einerseits und Mischschnecke 19 andererseits gegenläufig ausgebildet.

Unmittelbar in Förderrichtung 24 der Mischschnecke 19 hinter der Durchlassöffnung 22 mündet eine Mischwasserleitung 25 in den Mischbehälter 3 ein. Über diese Mischwasserleitung 25 wird das in der Feuchtgetreidemühle 4 geschrotete Mahlgut mit der erforderlichen Feuchtigkeit angereichert, so dass es die Überlauföffnung 26 am Ende des Mischbehälters 3 als teigiges, breiiges Einlagergut mit einem Feuchtigkeitsgehalt von beispielsweise 55% bis 60% verlässt.

Dem trichterförmig ausgebildeten Eingang 4" der Feuchtgetreidemühle 4 ist der Ausgang 5' der Dosierschnecke 5 zugeordnet, über welche das zu mahlende Getreide mengenabhängig zuführbar ist.

Der Getreidemengenzulauf aus der Dosierschnecke 5 in die Feuchtgetreidemühle 4 und/oder der Wassermengenzulauf aus der Mischwasserleitung 25 in den Mischbehälter 3 sind in Abhängigkeit von dem Feuchtigkeitsgehalt des Mischgutes im Mischbehälter 3 von einem Feuchtigkeits-Signalgeber 27 über die elektronische Regeleinrichtung 7 steuerbar. Zu diesem Zweck ist die Regeleinrichtung einerseits über eine Signalleitung 28 mit dem Feuchtigkeits-Signalgeber 27, über eine Regelleitung 29 mit einer Stelleinrichtung 30 am Ausgang 5' der Dosierschnecke 5 sowie über eine zweite Regelleitung 31 entweder mit dem Motor 32 einer Wasserpumpe 33 oder – sofern die Mischwasserleitung 25 an ein unter Druck stehendes Wassernetz angeschlossen ist – mit einem statt dessen dort angeordneten Absperr- bzw. Drosselventil verbunden.

Da der Feuchtigkeitsgehalt des Einlagergutes in der Nähe der Überlauföffnung 26 des Mischbehälters 3 entscheidend ist, wird vorteilhaft auch der Feuchtigkeits-Signalgeber 27 in der Nähe dieser Überlauföffnung 26 im Mischbehälter 3 angeordnet.

Ausserdem steht die Regeleinrichtung 7 noch über eine weitere Signalleitung 34 mit einem Niveau-Signalgeber 35 im Einfülltrichter 16 in Verbindung und ist ferner über die Regelleitung 36 mit dem Antriebsmotor 37 der Schneckenpumpe 2 verbunden.

Das neue Verfahren zur Nasseinlagerung von Futtergetreide in einem Silo 1 wird anhand der vorbeschriebenen Vorrichtung wie folgt durchgeführt:

Das vom Feld geerntete oder gekaufte Getreide wird in den Aufgabebehälter 6 geschüttet, wo es von der Dosierschnecke 5 in den Eingang 4' der Feuchtgetreidemühle 4 befördert wird. In der Feuchtgetreidemühle 4 wird das Getreide, welches sich aus Roggen, Gerste, Hafer, Weizen, CCM oder Mischungen davon zusammensetzen kann, gemahlen, wobei etwa 80% des Mahlgutes am Ausgang 4' der Feuchtgetreidemühle 4 eine Korngrösse unter zwei Millimetern aufweist. Vom Ausgang 4' der Feuchtgetreidemühle 4 wird das Mahlgut über die Förderschnecke 20 in Richtung des Pfeils 21 bis zur Durchlassöffnung 22 abgezogen. Auf diese Weise erfolgt zugleich eine Befreiung des Ausganges 4' von eventuellen Verklumpungen oder Verkrustungen. Das Mahlgut fällt sodann unter seiner Schwerkraft sowie unter Druckwirkung des nachfolgenden Mahlgutes durch die Durchlassöffnung 22 in den unteren Teil 3", 3''' des Mischbehälters 3, wo es von der Mischschnecke 19 erfasst und in Richtung des Pfeiles 24 weitergefördert wird. Unmittelbar hinter der Durchlassöffnung 22 wird über die Mischwasserleitung 25 die erforderliche Wassermenge zugesetzt, um in der Nähe der Überlauföffnung 26 ein teigiges, breiiges frisches Einlagergut mit einem Feuchtigkeitsgehalt von beispielsweise 55% bis 60% zu erhalten. Zu diesem Zweck misst Feuchtigkeits-Signalgeber 27 permanent den Feuchtigkeitsgehalt des Mischgutes in der Nähe der Überlauföffnung 26 und teilt seine Messergebnisse über die Signalleitung 28 der elektronischen Regeleinrichtung 7 mit. Bei Abweichungen von einem eingestellten Sollwert, beispielsweise bei zu geringer Feuchtigkeit, veranlasst die Regeleinrichtung 7 durch Einschalten des Motors 32 eine zusätzliche Wasserbeimischung über die Mischwasserleitung 25 und/oder über die Regelleitung 29 und die Stelleinrichtung 30 ein Drosseln des Getreidezulaufes über die Dosierschnecke 5.

Bei zu hohem Feuchtigkeitsgehalt kann die Regeleinrichtung 7 über die Regelleitung 29 und die Stelleinrichtung 30 den Zulauf des Getreides aus der Dosierschnecke 5 in die Feuchtgetreidemühle 4 beschleunigen und zugleich in entsprechendem Masse die Wasserzufuhr über die Mischwasserleitung 25 drosseln.

Dabei sorgt das Rührwerk 18 permanent für eine gleichmässige Durchmischung des Mahlgutes mit Feuchtigkeit, so dass ein in sich homogenes Gemisch die Überlauföffnung 26 in den Einfülltrichter 16 verlässt. Vom Einfülltrichter 16 wird das teigige, breiige frische Einlagergut von der Schneckenpumpe 2 über den Stutzen 15 angesaugt und sodann über die zweite Transportleitung 9 in den Silo 1 gedrückt. Bei einer ersten Füllung des Silos 1 kann der Füllvorgang noch dadurch beschleunigt werden, dass bei entsprechender Stellung des Dreiwegeventils 10 auch die erste Transportleitung 8 zur Füllung verwendet wird. Wenn sich in dem Silo bereits verfütterungsfähiges Einlagergut, das heisst, solches mit einem gewünschten Milchsäureanteil, befindet, dient die erste Transportleitung 8 lediglich noch zur Entnahme. Das Einlagern von frischem Einlagergut erfolgt tunlichst unter Luftabschluss. Zu diesem Zweck ist der Silo 1 mit einem Deckel 38 und mit einer Entgasungsleitung 39 versehen, über welche expandierende Gärgase in die freie Atmospähre 40 gelangen können.

Schon nach relativ kurzer Zeit von zwei bis vier Tagen setzen Milchsäurebakterien ca. 3% der Stärke des frisch eingelagerten Einlagergutes in Milchsäure um. In diesem Zustand weist das Einlagergut einen PH-Wert von 3,5 bis 4 auf. Damit ist das Futter vollbiologisch konserviert und kann ohne zusätzliche Antibiotika an unter starkem Infektionsdruck stehende Schweine verfüttert werden.

Zu diesem Zweck wird die zweite Transportleitung 9 über das Dreiwegeventil 10 geschlossen und die erste Transportleitung 8 zur Schneckenpumpe 2 geöffnet. Die Drehrichtung der Schneckenpumpe 2 wird durch eine entsprechende Schaltung an ihrem Antriebsmotor 37 umgekehrt. Nunmehr wirkt die Schneckenpumpe 2 in bezug auf den Silo 1 als Saugpumpe. Sie saugt über die Mündung 8' und die erste Transportleitung 8 das im unteren, trichterförmigen Teil 11 befindliche, biologisch konservierte und damit verfütterungsfähige Einlagergut ab und drückt es über den Stutzen 15 in die in diesem Fall an ihn angeschlossene Entnahmeleitung 17 in einen nicht dargestellten, jedoch an sich bekannten Aufbereitungsbehälter. In diesem Aufbereitungsbehälter wird zuvor das teigige, breiige Einlagergut in flüssiges Futter durch Wasserzusatz umgewandelt. Ausserdem wird es durch Zusatz von Eiweisskomponenten im weitesten Sinne wie z. B. Soja-, Fleisch- und Fischmehl ergänzt. Hiernach kann es sodann über bekannte Pumpdosieranlagen in ebenso bekannter Weise vollautomatisch zu den einzelnen Futtertrögen gepumpt werden.

Im Falle von Verklumpungen bzw. Verkrustungen in der Nähe der Mündung 8' der ersten Transportleitung 8 werden diese von unter einstellbarem Druck stehendem Wasser über die Leitung 13 und den Sprühkopf 14 freigespült, zumal ohnehin das breiige, teigige Einlagergut anschliessend mit Wasser zur Verflüssigung versetzt werden muss. Auch der Einsatz dieses Spülwassers über die Leitung 13 kann über die Regeleinrichtung 7 und beispielsweise einen in der ersten Transportleitung 8 befindlichen Pressostaten in Abhängigkeit vom Innendruck in der Transportleitung gesteuert werden.

Um beim Füllvorgang Störungen der Schneckenpumpe 2 und/oder das Ansaugen von atmosphärischer Aussenluft über den Trichter 16 in den Silo 1 zu unterbinden, ist in dem Trichter 16 der Niveau-Signalgeber 35 angeordnet. Dieser Niveau-Signalgeber 35 erteilt der Regeleinrichtung 7 bei Abfallen eines einstellbaren Niveaus beispielsweise das Signal, dass der Pegel des frischen Einlagergutes im Trichter 16 abgefallen ist. Dann schaltet die Regeleinrichtung 7 den Antriebsmotor 37 der Schneckenpumpe 2 solange ab, bis sich im Trichter 16 eine hinreichende Menge mit frischem Einlagergut befindet.

Es versteht sich, dass im Rahmen der Erfindung die Vorrichtung Abänderungen erfahren kann. So ist es beispielsweise auch möglich, die Pumpe 41 in der Wasserzuleitung 13 durch ein Absperrventil zu ersetzen oder zu ergänzen, was ebenfalls für die Pumpe 33 mit dem Elektromotor 32 zutrifft, der bei Einsatz eines Regelventils durch einen Stellmotor ersetzt wird. Ebenso kann der Stutzen 15 mit einem Dreiwegeventil 10 versehen werden, von dem ein Weg mit dem Einfülltrichter 16 und ein anderer Weg mit der Entnahmeleitung 17 verbunden ist.

Vorstehend wurde stets beschrieben, dass die Leitungen 25 und 13 Wasser zuführen. Verfahrensmässig ist es jedoch auch möglich, über die Leitung 25 eine wässrige Mischung oder Lösung zuzuführen, in der beispielsweise «Impfstoffe» als Katalysatoren zur Beschleunigung der Milchsäurebildung und/oder Eiweisskomponenten enthalten sind. Ebenso kann über die Leitung 13 nicht nur Wasser, sondern auch eine wässrige Mischung oder Lösung zugeführt werden, die Eiweisskomponenten oder dergleichen enthält.

Ferner kann bei einer Störung bei der Entnahme des verfütterungsfähigen Einlagergutes aus dem Silo 1 nicht nur über die Wasserzuleitung 13, sondern auch über die Schneckenpumpe 2 und die erste Transportleitung 8 eine Flüssigkeit zur Lösung dieser Störung zugeführt werden.

Um Energie zu sparen und leistungsfähiger zu schroten, ist der Feuchtgetreidemühle 4 vorteilhaft eine Quetscheinrichtung vorgeschaltet, die mit einer Fremdkörperabscheidung gekoppelt ist.

Das neue Verfahren sowie die neue Vorrichtung zur Durchführung dieses Verfahrens zeichnet sich dadurch aus, dass keine technischen Anlagen im Silo montiert werden müssen, die irgendeiner Wartung bedürfen. Bei den bisherigen, trockenen Einlagerungsverfahren müssen vor jedem Einlagern und Entnehmen wegen der Gasbildung unter Lebensgefahr technische Einrichtungen montiert und demontiert werden. Ferner können bei herkömmlichen Vorrichtungen Störungen auftreten, infolge derer mehrere Tage kein Futter entnehmbar ist und durch die somit zwangsbedingte Futterumstellung bei Schweinen Leistungseinbussen auftreten.

Bei der neuen Verfahrensweise legt sich der Betrieb nicht auf die Erzeugung bestimmter Futtermittel (Maisanbau, Getreideanbau, Zukauffuttermittel) fest, sondern es ist auch möglich, Weizen vorteilhaft mit soviel Spelzen einlagern zu können, dass dieses Futter vom Rohfasergehalt her beispielsweise für Schweine optimal ist.

Im Versuch hat es sich als vorteilhaft erwiesen, unterhalb des Mischbehälters 3 zur Restentleerung und Reinigung eine verschliessbare Öffnung anzuordnen.

Stückliste:

| | | | |
|---|---|---|---|
| Silo | 1 | | |
| Schneckenpumpe | 2 | | |
| Mischbehälter | 3 | | |
| Quaderförmiges Teil | 3' | | |
| Prismatisches Teil | 3" | | |
| Abgerundetes Teil | 3''' | | |
| Feuchtgetreidemühle | 4 | | |
| Ausgang von 3 | 4' | | |
| Eingang von 3 | 4" | | |
| Dosierschnecke | 5 | | |
| Ausgang von 5 | 5' | | |
| Aufgabetrichter | 6 | | |
| Regeleinrichtung | 7 | | |
| Transportleitung | 8 | 9 | |
| Einmündungsstelle | 8' | 9' | |
| Dreiwegeventil | 10 | | |
| Trichter | 11 | | |
| Ende von Silo | 12 | | |
| Abstand | A | | |
| Wasserleitung | 13 | 25 | |
| Ausflussende | 13' | | |
| Sprühkopf | 14 | | |
| Stutzen | 15 | | |
| Einfülltrichter | 16 | | |
| Entnahmeleitung | 17 | | |
| Rührwerk | 18 | | |
| Mischschnecke | 19 | | |
| Förderschnecke | 20 | | |
| Pfeil | 21 | 24 | |
| Durchflussöffnung | 22 | | |
| Trennwand | 23 | | |
| Überlauföffnung | 26 | | |
| Feuchtigkeits-Signalgeber | 27 | 35 | |
| Signalleitung | 28 | 34 | |
| Regelleitung | 29 | 31 | 36 |
| Stelleinrichtung | 30 | | |
| Motor | 32 | 37 | |
| Wasserpumpe | 33 | | |
| Deckel | 38 | | |
| Entgasungsleitung | 39 | | |
| Atmosphöre | 40 | | |

## Patentansprüche

1. Verfahren zur Herstellung von Futtermittel aus Getreide, wie z. B. Corn Cob Mix, das gemahlen, gemischt und sodann in einem Silo gelagert wird, aus dem es entnommen und mit einem bestimmten Feuchtigkeitsgehalt verfüttert wird, dadurch gekennzeichnet, dass das Getreide vor seiner Einlagerung in einem Mischbehälter durch Zusatz von Wasser und/oder Impfstoffen als Katalysatoren zur Beschleunigung der Milchsäurebildung und/oder Eiweisskomponenten zu einem teigigen, breiigen Einlagergut auf einen Feuchtigkeitsgehalt von 55% bis 60% gemischt und angereichert wird, sodann unter bekanntem Luftabschluss in dem Silo eingelagert, dort belassen und daraus nach Bildung einer bestimmten Menge von Milchsäure entnommen wird.

2. Verfahren nach Anspruch 1, dadurch gekennzeichnet, dass frisches Einlagergut gemeinsam mit verfütterungsfähigem Einlagergut in einem gemeinsamen Silo angeordnet wird.

3. Verfahren nach Anspruch 1 oder 2, dadurch gekennzeichnet, dass frisches Einlagergut in den Silo gepumpt und verfütterungsfähiges Einlagergut von dort abgesaugt wird.

4. Verfahren nach den Ansprüchen 1 bis 3, dadurch gekennzeichnet, dass frisches Einlagergut solange in dem Silo belassen wird, bis es durch einen Milchsäureanteil von mindestens 2% bei einem PH-Wert von höchstens 4,5 in verfütterungsfähiges Einlagergut umgewandelt wird.

5. Verfahren nach den Ansprüchen 1 bis 4, dadurch gekennzeichnet, dass frisches Einlagergut in seiner Umsetzung in verfütterungsfähiges Einlagergut etwa 2 bis 4 Tage in dem Silo belassen wird.

6. Verfahren nach den Ansprüchen 1 bis 5, dadurch gekennzeichnet, dass als Einlagergut Getreide, wie Roggen, Gerste, Hafer, Weizen, CCM oder Mischungen davon, verwendet werden.

7. Verfahren nach den Ansprüchen 1 bis 6, dadurch gekennzeichnet, dass etwa 80% des Getreides auf eine Korngrösse unter 2 mm gemahlen wird.

8. Verfahren nach den Ansprüchen 1 bis 7, dadurch gekennzeichnet, dass das CCM mit einem Spindelanteil von 60% bis 70% versehen wird.

9. Verfahren nach den Ansprüchen 1 bis 8, dadurch gekennzeichnet, dass die Einlagerung unter Luftabschluss erfolgt.

10. Verfahren nach den Ansprüchen 1 bis 9, dadurch gekennzeichnet, dass die Einlagerung von frischem Einlagergut und die Entnahme von verfütterungsfähigem Einlagergut vollautomatisch durchgeführt werden.

11. Vorrichtung zur Durchführung des Verfahrens nach den Ansprüchen 1 bis 10, mit einem Silo, einer Füll- und einer Entnahmeeinrichtung, dadurch gekennzeichnet, dass das Getreide vor seiner Einlagerung von einer Dosierschnecke (5) in einen Mischbehälter (3) transportierbar und dort durch Zusätze zu einem teigigen, breiigen Einlagergut auf einen Feuchtigkeitsgehalt von 55% bis 60% mischbar ist, von dort über einen Einfülltrichter (16) in eine die Füll- und Entnahmeeinrichtung bildenden Schneckenpumpe (2) gelangt, die über mindestens eine Transportleitung (8, 9) mit dem Silo (1) verbunden ist.

12. Vorrichtung nach Anspruch 11, dadurch gekennzeichnet, dass die Schneckenpumpe (2) an einer Seite mit einem Dreiwegeventil (10) verbunden ist, von dem zwei Transportleitungen (8, 9) zum Silo (1) führen, wobei die erste Transportleitung (8) in das untere, vorteilhaft trichterförmig ausgebildete Ende (11) des Silos (1) und die zweite Transportleitung (9) oberhalb davon in den Silo (1) einmündet.

13. Vorrichtung nach Anspruch 12, dadurch gekennzeichnet, dass die zweite Transportleitung (9) mindestens zwei Meter oberhalb der ersten Transportleitung (8) in den Silo (1) einmündet.

14. Vorrichtung nach den Ansprüchen 11 bis 13, dadurch gekennzeichnet, dass die erste Transportleitung (8) zugleich als Füll- und Entnahmeleitung ausgebildet ist.

15. Vorrichtung nach den Ansprüchen 11 bis 14, dadurch gekennzeichnet, dass eine absperrbare Wasserzuleitung (13) mit ihrem Ausflussende (13') im Innenraum des Silos (1) unmittelbar oberhalb der Mündungsöffnung (8') der ersten Transportleitung (8) angeordnet und auf diese gerichtet ist.

16. Vorrichtung nach Anspruch 15, dadurch gekennzeichnet, dass das Ausflussende (13') der Wasserzuleitung (13) mit einem Sprühkopf (14) versehen ist.

17. Vorrichtung nach den Ansprüchen 1 bis 16, dadurch gekennzeichnet, dass die Schneckenpumpe (2) an ihrer vom Dreiwegeventil (10) abgewandten Seite mit einem Stutzen (15) versehen ist, mit welchem wahlweise ein Einfülltrichter (16) oder eine Entnahmeleitung (17) verbindbar sind.

18. Vorrichtung nach den Ansprüchen 11 bis 17, dadurch gekennzeichnet, dass oberhalb des Einfülltrichters (16) der Schneckenpumpe (2) eine Überlauföffnung (26) eines Mischbehälters (3) angeordnet ist, in welchem gemahlenes Getreide mit Wasser angereichert und durch ein Rührwerk (18) zu einem teigigen, breiigen Einlagergut vermischbar ist.

19. Vorrichtung nach den Ansprüchen 11 bis 18, dadurch gekennzeichnet, dass dem Mischbehälter (3) eine Feuchtgetreidemühle (4) zugeordnet ist, von deren Ausgang (4') das Mahlgut über eine Förderschnecke (20) und eine Mischschnecke (19) in den Mischbehälter (3) förderbar ist.

20. Vorrichtung nach Anspruch 19, dadurch gekennzeichnet, dass die Förderschnecke (20) oberhalb der Mischschnecke (19) angeordnet ist und beide Schnecken (19, 20) bis auf eine Durchlassöffnung (22) voneinander durch eine Trennwand (23) getrennt sowie ihre Förderrichtungen (21, 24) gegenläufig ausgebildet sind.

21. Vorrichtung nach Anspruch 20, dadurch gekennzeichnet, dass unmittelbar in Förderrichtung (24) der Mischschnecke (19) nach der Durchlassöffnung (22) eine Mischwasserleitung (25) in den Mischbehälter (3) einmündet.

22. Vorrichtung nach den Ansprüchen 11 bis 21, dadurch gekennzeichnet, dass dem Eingang (4") der Feuchtgetreidemühle (4) der Ausgang (5') einer Dosierschnecke (5) zugeordnet ist, über welche das zu mahlende Getreide mengenabhängig zuführbar ist.

23. Vorrichtung nach einem oder mehreren der Ansprüche 11 bis 22, dadurch gekennzeichnet, dass der Getreidemengenzulauf aus der Dosierschnecke (5) in die Feuchtgetreidemühle (4) und/oder der Wassermengenzulauf aus der Mischwasserleitung (25) in den Mischbehälter (3) in Abhängigkeit von dem Feuchtigkeitsgehalt des Mischgutes im Mischbehälter (3) von einem Feuchtigkeits-Signalgeber (27) über eine elektronische Regeleinrichtung (7) steuerbar sind.

24. Vorrichtung nach Anspruch 23, dadurch gekennzeichnet, dass der Feuchtigkeits-Signalgeber (27) in der Nähe der Überlauföffnung (26) des Mischbehälters (3) angeordnet ist.

25. Vorrichtung nach einem oder mehreren der Ansprüche 11 bis 24, dadurch gekennzeichnet, dass die Schneckenpumpe (2) in Abhängigkeit von einem im Einfülltrichter (16) angeordneten Niveau-Signalgeber (35) über die elektronische Regeleinrichtung (7) ein- und ausschaltbar ist.

26. Vorrichtung nach einem oder mehreren der Ansprüche 11 bis 25, dadurch gekennzeichnet, dass der Feuchtgetreidemühle (4) eine Quetscheinrichtung vorgeschaltet ist.

27. Vorrichtung nach Anspruch 26, dadurch gekennzeichnet, dass die Quetscheinrichtung mit einer Fremdkörperabscheidung gekoppelt ist.


**Claims**

1. Process for the manufacture of animal feed material from cereals, such as for example corn cob mix, which is ground, mixed and then stored in a silo from which it is withdrawn and fed, with a predetermined moisture content, to animals, characterised in that, before its storage, the cereal is mixed and enriched in a mixing container, by the addition of water and/or inoculation materials as catalysts for accelerating the formation of lactic acid and/or protein components, to a dough-like paste-like storage material with a moisture content of 55% to 60%, and is then stored under the known exclusion of air in the silo left there and withdrawn therefrom after the formation of a predetermined amount of lactic acid.

2. Process according to claim 1, characterised in that fresh storage material is arranged in a common silo together with storage material ready for feeding to animals.

3. Process according to claim 1 or 2, characterised in that fresh storage material is pumped into the silo and storage material ready for feeding to animals is withdrawn therefrom.

4. Process according to claims 1 to 3, characterised in that fresh storage material is left in the silo until it is converted, by a lactic acid content of at least 2% at a pH value of at most 4.5, into storage material ready for feeding to animals.

5. Process according to claim 1 to 4, characterised in that fresh storage material, in being converted to storage material ready for feeding to animals, is left for approximately 2 or 4 days in the silo.

6. Process according to claims 1 to 5, characterised in that cereals, such as rye, barley, oats, wheat, CCM or mixtures thereof, are used as the storage material.

7. Process according to claims 1 to 6, characterised in that approximately 80% of the cereal is ground to a particle size of under 2 mm.

8. Process according to claims 1 to 7, characterised in that CCM with a spindle content of 60% to 70% is provided.

9. Process according to claims 1 to 8, characterised in that the storage is effected with exclusion of air.

10. Process according to claims 1 to 9, characterised in that the storage of fresh storage material and the withdrawal of storage material ready for feeding to animals is carried out fully automatically.

11. Apparatus for carrying out the process of claims 1 to 10, with a silo, a charging device and a withdrawing device, characterised in that the cereal, before its storage, is transportable by a metering screw (5) into a mixing container (3), where it is mixable by means of additions to a dough-like past-like storage material having a moisture content of 55% to 60% and from where it passes through a charging funnel (16) into a screw pump (2), forming the charging and withdrawing device, which is connected to the silo (1) by at least one supply conduit (8, 9).

12. Apparatus according to claim 11, characterised in that the screw pump (2) is connected at one side to a three-way valve (10), from which two supply conduits (8, 9) lead to the silo (1), the first supply conduit (8) discharging into the lower, advantageously funnel-shaped, end (11) of the silo and the second supply conduit (9) discharging into the silo higher up.

13. Apparatus according to claim 12, characterised in that the second supply conduit (9) discharges into the silo (1) at least two metres above the first supply conduit (8).

14. Apparatus according to claims 11 to 13, characterised in that the first supply conduit (8) is formed both as a charging and withdrawing conduit.

15. Apparatus according to claims 11 to 14, characterised in that a closable water supply duct (13) is arranged with its outlet end (13') inside the silo (1) immediately above the discharge opening (8') of the first supply conduit (8).

16. Apparatus according to claim 15, characterised in that the outlet end (13') of the water supply duct (13) is provided with a spray head (14).

17. Apparatus according to claims 11 to 16, characterised in that the screw pump (2) is provided at its side away from the three-way valve with a pipe (15) with which a charging funnel (16) or a withdrawing conduit (17) is selectively connectable.

18. Apparatus according to claims 11 to 17, characterised in that, above the charging funnel (16) of the screw pump (2), an overflow opening (26) of a mixing container (3) is arranged, in which ground cereal is enriched with water and is mixable by a stirring apparatus (18) to a dough-like paste-like storage material.

19. Apparatus according to claims 11 to 18, characterised in that the mixing container (3) is associated with a moist cereal mill (4), from the outlet (4') of which the milled material is chargeable into the mixing container (3) by a feed screw (20) and a mixing screw (19).

20. Apparatus according to claim 19, characterised in that the feed screw (20) is arranged above the mixing screw (19) and, up to an access opening (22), the two screws (19, 20) are separated from one another by a partition wall (23) and are arranged with their feed directions (21, 24) opposite.

21. Apparatus according to claim 20, characterised in that a mixing water conduit (25) discharges directly into the mixing container (3) in the feed direction (24) of the mixing screw (18) after the access opening (22).

22. Apparatus according to claims 11 to 21, characterised in that the inlet (4″) of the moist cereal mill (4) is associated with the outlet (5′) of a metering screw (5), through which the cereal to be milled can be supplied according to amount.

23. Apparatus according to one or more of claims 11 to 22, characterised in that the amount of cereal supplied by the metering screw (5) into the moist cereal mill (4) and/or the amount of water supplied from the mixing water conduit (25) into the mixing container (3) is controllable in dependence upon the moisture content of the mixed material in the mixing container (3) by a moisture signal generator (27) by way of an electronic control device (7).

24. Apparatus according to claim 23, characterised in that the moisture signal generator (27) is arranged in the vicinity of the overflow opening (26) of the mixing container (3).

25. Apparatus according to one or more of claims 11 to 24, characterised in that the screw pump (2) can be switched on and off by means of an electronic control apparatus (7) in dependence upon a level signal generator (35) arranged in the charging funnel (16).

26. Apparatus according to one or more of claims 11 to 25, characterised in that the moist cereal mill (4) is preceded by a mashing device.

27. Apparatus according to claim 26, characterised in that the mashing device is coupled to a foreign body separator.

## Revendications

1. Procédé pour la préparation d'aliment pour bétail à partir de céréales, comme par exemple du corn cob mix (mélange de balle de maïs), qui est broyé, mélangé et ensuite stocké dans un silo dont il est retiré et donné au bétail avec une certaine teneur en humidité, caractérisé en ce qu'on mélange et enrichit les céréales préalablement à leur ensilage, dans un mélangeur, par addition d'eau et/ou de germes à titre de catalyseur pour accélérer la formation d'acide lactique d'ensilage pâteux et pulpeux ayant une teneur en humidité allant de 55% à 60%, en ce qu'on les stocke de manière connue en absence d'air, dans le silo, les laisse reposer dans celui-ci et les retire dudit silo, après formation d'une certaine quantité d'acide lactique.

2. Procédé selon la revendication 1, caractérisé en ce qu'on stocke simultanément du produit d'ensilage frais avec du produit d'ensilage prêt à la consommation dans un même silo.

3. Procédé selon la revendication 1 ou 2, caractérisé en ce qu'on pompe du produit d'ensilage frais dans le silo et en aspire du produit d'ensilage prêt à la consommation.

4. Procédé selon les revendications 1 à 3, caractérisé en ce qu'on laisse le produit d'ensilage frais dans le silo jusqu'à ce que celui-ci soit transformé en produit d'ensilage prêt à la consommation, présentant une teneur en acide lactique d'au moins 2% et un pH de tout au plus 4,5.

5. Procédé selon les revendications 1 à 4, caractérisé en ce qu'on laisse le produit d'ensilage frais pendant environ 2 à 4 jours dans le silo pour la transformation en produit d'ensilage prêt à la consommation.

6. Procédé selon les revendications 1 à 5, caractérisé en ce qu'on utilise, à titre de produit d'ensilage, des céréales comme le seigle, l'orge, l'avoine, le blé, le froment, le ccm ou des mélanges de ceux-ci.

7. Procédé selon les revendications 1 à 6, caractérisé en ce qu'on broie environ 80% des céréales à une dimension de particules inférieure à 2 mm.

8. Procédé selon les revendications 1 à 7, caractérisé en ce que le ccm comporte une teneur en tiges de 60 à 70%.

9. Procédé selon les revendications 1 à 8, caractérisé en ce que l'ensilage est effectué en absence d'air.

10. Procédé selon les revendications 1 à 9, caractérisé en ce que l'ensilage de produit d'ensilage frais et le déchargement de produit d'ensilage prêt à consommation sont effectués de manière complètement automatique.

11. Installation pour la mise en œuvre du procédé selon les revendications 1 à 10, comportant un silo, un dispositif de chargement et déchargement, caractérisé en ce que, avant ensilage, les céréales sont transportables au moyen d'une vis de dosage (5), dans un mélangeur (3), et y sont mélangeables, grâce à des additifs, en un produit d'ensilage pâteux et pulpeux ayant une teneur en humidité de 55% à 60%, en ce qu'elles arrivent dudit mélangeur, via une trémie de chargement (16), dans une pompe à vis (2), constituant le dispositif de chargement et de déchargement, qui est relié par au moins un conduit de transport (8, 9) au silo (1).

12. Installation selon la revendication 11, caractérisée en ce que la pompe à vis (2) est reliée, d'un côté, à une vanne à trois voies (10) à partir de laquelle deux conduits de transport (8, 9) mènent au silo (1), le premier conduit de transport (8) aboutissant dans l'extrémité inférieure (11) du silo (1), avantageusement en forme d'entonnoir, et le deuxième conduit de transport (9) aboutissant au-dessus du premier, dans le silo (1).

13. Installation selon la revendication 12, caractérisée en ce que le deuxième conduit de transport (9) aboutit au moins à deux mètres au-dessus du premier conduit de transport (8) dans le silo (1).

14. Installation selon les revendications 11 à 13, caractérisée en ce que le premier conduit de transport (8) constitue simultanément le conduit de chargement et de déchargement.

15. Installation selon les revendications 11 à 14, caractérisée en ce qu'un conduit d'adduction d'eau obturable (13) est agencé avec son extrémité (13′), à l'intérieur du silo (1).

16. Installation selon la revendication 15, caractérisée en ce que l'extrémité (13') du conduit d'adduction (13) est munie d'une tête de pulvérisation (14).

17. Installation selon les revendications 1 à 16, caractérisée en ce que la pompe à vis (2) est munie, à son extrémité opposée à la vanne à trois voies (10) d'une tubulure (15) à laquelle une trémie de chargement (16) ou un conduit de déchargement (17) sont raccordables au choix.

18. Installation selon les revendication 11 à 17, caractérisée en ce que, au-dessus de la trémie de chargement (16) de la pompe à vis (2), est agencée une ouverture de trop-plein (26) d'un mélangeur (3) dans lequel des céréales sont enrichies avec de l'eau et mélangeables de manière à obtenir un produit d'ensilage pâteux et pulpeux.

19. Installation selon les revendications 11 à 18, caractérisée en ce qu'un broyeur de céréales humides (4) est associé au mélangeur (3), le produit de broyage étant transportable, via une vis de transport (20) et une vis de mélange (19), de la sortie (4') dudit broyeur vers le mélangeur (3).

20. Installation selon la revendication 19, caractérisée en ce que la vis de transport (20) est agencée au-dessus de la vis de mélange (19), en ce que les deux vis (19, 20) sont séparées l'une de l'autre par une paroi de séparation (23), mise à part une ouverture de passage (22) et en ce que leur sens de transport (21, 24) sont contraires.

21. Installation selon la revendication 20, caractérisée en ce que , immédiatement dans le sens de transport (24) de la vis de mélange (19), après l'ouverture de passage (22), un conduit d'eau de mélange (25) aboutit dans le mélangeur (3).

22. Installation selon les revendications 11 à 23, caractérisée en ce que la sortie (5') d'une vis de dosage (5) est associée à l'entrée (4") du broyeur de céréales humides (4), et transporte les céréales à broyeur selon les quantités voulues.

23. Installation selon une ou plusieurs des revendications 11 à 22, caractérisée en ce que la quantité de céréales admise par la vis de dosage (5) dans le broyeur de céréales humides (4) et/ou la quantité d'eau admise par le conduit d'eau de mélange (25) dans le mélangeur (3) sont réglables, en fonction de la teneur en humidité du produit mélangé dans le mélangeur (3), grâce à une sonde d'humidité (27) et au moyen d'un dispositif de régulation automatique.

24. Installation selon la revendication 23, caractérisée en ce que la sonde d'humidité (27) est logée à proximité de l'ouverture de trop-plein (26) du mélangeur (3).

25. Installation selon une ou plusieurs des revendications 11 à 24, caractérisée en ce que la pompe à vis (2) peut être mise en marche ou arrêtée, en fonction d'une sonde de niveau (35) agencée dans la trémie de chargement (16) au moyen d'un dispositif de régularisation (7).

26. Installation selon une ou plusieurs des revendications 11 à 25, caractérisée en ce qu'une presse est montée en amont du broyeur de céréales humides (4).

27. Installation selon la revendication 26, caractérisée en ce que la presse est couplée à un séparateur de corps étrangers.

Fig.1

0082366

*Fig.2*

13

Fig 3

Fig.4